Europäisches Patentamt

(19) European Patent Office

Office européen des brevets

(11) Numéro de publication : **0 031 269**
**B1**

(12) **FASCICULE DE BREVET EUROPÉEN**

(45) Date de publication du fascicule du brevet :
11.04.84

(51) Int. Cl.³ : **H 04 N   7/02**

(21) Numéro de dépôt : **80401726.7**

(22) Date de dépôt : **02.12.80**

(54) **Dispositif de mesure, en exploitation, de produits de non linéarité, et émetteur et/ou réémetteur de télévision comportant un tel dispositif.**

(30) Priorité : **21.12.79 FR 7931488**

(43) Date de publication de la demande :
**01.07.81 Bulletin 81/26**

(45) Mention de la délivrance du brevet :
**11.04.84 Bulletin 84/15**

(84) Etats contractants désignés :
**AT BE CH DE GB IT LI LU NL SE**

(56) Documents cités :
**DE-A- 2 413 367**
**FR-A- 2 301 133**
**FR-A- 2 408 959**
**US-A- 2 646 461**
**US-A- 3 867 010**
**ELECTRICAL COMMUNICATION, vol. 47, no. 3, 1972 Londres GB G. MÜLLER et al.: "Combined amplifier technique for vision and sound in medium power television transmitters", pages 169-174**
**FUNKSCHAU, vol. 46, no. 8, avril 1974 Munich DE P. DAMBACHER et al.: "Fernsehmesstechnik mit Prüfzellensignalen" pages 244-248**
**THE RADIO AND ELECTRON ENGINEER vol. 41, no. 7, juillet 1971 Londres GB J.F.H. BINNS: "Measuring techniques for U.H.F. television transmitters employing klystrons", pages 309-314**

(73) Titulaire : **L.G.T. LABORATOIRE GENERAL DES TELE-COMMUNICATIONS**
**51, boulevard de la République**
**F-78400 Chatou (FR)**

(72) Inventeur : **Cluniat, Claude**
**THOMSON-CSF SCPI 173, bld Haussmann**
**F-75360 Paris Cedex 08 (FR)**
Inventeur : **Dominguez, Mariano**
**THOMSON-CSF SCPI 173, bld Haussmann**
**F-75360 Paris Cedex 08 (FR)**

(74) Mandataire : **Turlèque, Clotilde et al**
**THOMSON-CSF SCPI 173, Bld Haussmann**
**F-75379 Paris Cedex 08 (FR)**

Dispositif de mesure, en exploitation, de produits de non-linéarité et émetteur et/ou réémetteur de télévision comportant un tel dispositif

La présente invention concerne les dispositifs de mesure, en exploitation, du niveau de produits de non-linéarité dans les équipements de transmission et/ou de retransmission de signaux de télévision et, en particulier, dans les étages de puissance de ces équipements.

La non-linéarité des équipements introduit généralement de graves détériorations de la qualité des signaux transmis surtout lorsque les équipements transmettent plusieurs porteuses, dont une modulée en amplitude dans une large bande, comme c'est le cas en télévision.

Les conséquences de cette non-linéarité se traduisent essentiellement par la création de fréquences parasites résultant du battement des fréquences initiales et/ou de leurs harmoniques (phénomène généralement appelé intermodulation) et par une modulation en amplitude de chaque fréquence initiale fonction de l'amplitude des autres (modulation croisée ou cross-modulation en littérature anglo-saxonne).

En dehors des périodes d'exploitation, il existe de nombreux types d'appareillages permettant aux techniciens d'entretenir et de régler les équipements pour réduire ces phénomènes et les rendre compatibles avec la qualité requise des signaux transmis.

Mais il est très souhaitable de surveiller la qualité de la transmission en cours d'exploitation.

Il est connu par la demande de brevet FR-A-2 301 133 au nom de la Demanderesse d'exploiter dans ce but des signaux de test, inclus dans une des lignes de suppression de trame, pendant la durée desquels on effectue une mesure d'intermodulation dans la bande transmise à la fréquence $F_I + F_S - F_{BL}$ par exemple, où $F_I$ et $F_S$ sont les fréquences des porteuses image et son et $F_{BL}$ la fréquence d'une bande latérale. Cette mesure représente un état artificiel et figé de la charge des équipements et surtout, n'est pas disponible en permanence. Dans certains pays, le signal à la fréquence test n'existe même pas.

La présente invention a pour objet un dispositif de mesure, en exploitation, du niveau des produits de non-linéarité. Il est connu, notamment par un article intitulé « Combined amplifier technique for vision and sound in medium power television transmitters » pages 169-174 du volume 47 n° 3, 1972, d'« Electrical communications » que des produits d'intermodulation sont générés suite aux non-linéarités aussi bien dans la bande utile transmise qu'en dehors de cette bande. L'invention utilise des produits hors bande pour mesurer en exploitation le niveau des produits de non-linéarité.

Selon l'invention, un dispositif de mesure, en exploitation, du niveau des produits de non-linéarité générés dans les équipements de transmission et/ou de retransmission de signaux de télévision dont les émetteurs comportent un étage final d'amplification de puissance suivi d'un filtre de bande comportant un circuit de prélèvement du signal amplifié par cet étage, est caractérisé en ce que le circuit de prélèvement est inséré en amont du filtre de bande, et en ce que le dispositif de mesure comporte en outre :

— un premier circuit de traitement du signal prélevé comportant une entrée de commande, un amplificateur sélectif et un détecteur d'un produit d'intermodulation du troisième ordre situé en dehors de la bande du signal amplifié utile, ce premier circuit fournissant un signal d'amplitude proportionnelle au niveau du produit d'intermodulation détecté lorsqu'un signal est appliqué à l'entrée de commande,

— un deuxième circuit de traitement comportant un filtre et un circuit détecteur du signal vidéofréquence inclus dans le signal prélevé, et un circuit de commande dont la sortie est couplée à l'entrée de commande du premier circuit et qui délivre un signal de sortie pendant des instants correspondant à au moins un niveau prédéterminé du signal vidéofréquence.

L'invention a également pour objet un émetteur, ou réémetteur, de télévision comportant un tel dispositif de mesure.

L'invention sera mieux comprise et d'autres caractéristiques apparaîtront à l'aide de la description ci-après et des dessins s'y rapportant sur lesquels :

la figure 1 est un schéma de principe général d'un dispositif de mesure selon l'invention associé aux étages terminaux d'un émetteur ou réémetteur de signaux de télévision ;

les figures 2 et 3 sont des schémas d'exemples de réalisation de certains organes montrés figure 1.

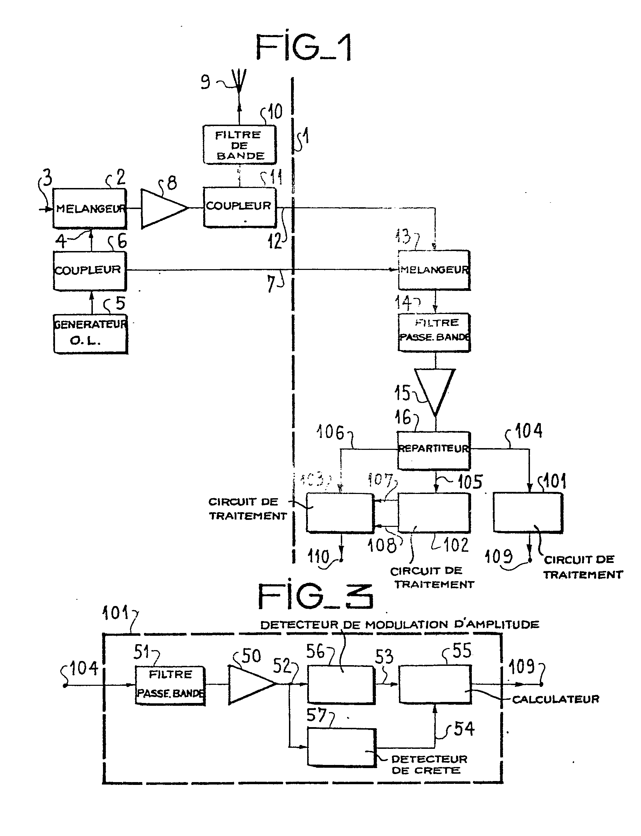

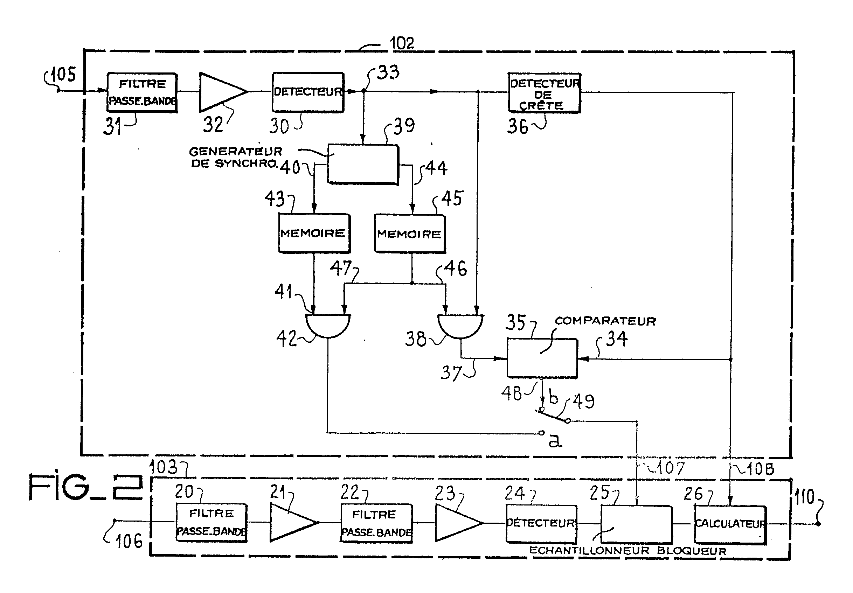

Sur la figure 1, sont représentés, à la gauche d'un trait interrompu 1, des étages terminaux d'émission classiques constitués d'un mélangeur 2 recevant, sur son entrée 3, des signaux à fréquence intermédiaire modulés par un signal composite de télévision, et sur son entrée 4, le signal de sortie d'un générateur d'oscillation locale 5, à travers un coupleur 6, ajouté aux étages classiques, afin de distraire une petite part du signal de ce générateur 5 sur une sortie 7.

La sortie du mélangeur 2 est connectée à un amplificateur de puissance 8 alimentant une antenne d'émission 9 à travers un filtre de bande 10. Entre ce dernier et l'amplificateur 8, est inséré un coupleur 11, afin de distraire une part du signal amplifié sur une sortie 12.

Il est supposé dans cet exemple que le signal transmis dans ces étages classiques comporte une porteuse image de fréquence $F_I$ modulée en amplitude négativement, une porteuse son de fréquence $F_S$, modulé en fréquence, et une sous-porteuse de chrominance $F_C$ laquelle n'est qu'un cas particulier des bandes latérales $F_B$ dues à la modulation en amplitude de $F_I$, ces fréquences étant telles que $F_I < F_B < F_S$, en ne considérant que la bande latérale non atténuée.

Le dispositif de mesure selon l'invention comporte un mélangeur 13 dont les deux entrées sont reliées respectivement aux sorties 7 et 12.

La sortie du mélangeur 13 est connectée à l'entrée d'un répartiteur 16 à travers un filtre passe bande 14 suivi d'un amplificateur 15.

Ce répartiteur 16 possède trois sorties 104 à 106 connectées respectivement aux entrées de signal de trois circuits de traitement : le circuit 101 fournissant sur sa sortie 109 un signal de modulation croisée, le circuit 102 fournissant sur ses sorties 107 et 108, des informations nécessaires au dernier circuit 103, qui délivre sur sa sortie 110 un signal d'intermodulation.

Cette intermodulation, qu'il est connu de mesurer à partir du produit du troisième ordre $F_I - F_B + F_S$, situé dans la bande utile transmise et générée, soit à l'aide des signaux de test émis dans les instants de suppression de trame, soit à partir de trois générateurs, est ici mesurée à partir d'un autre produit de troisième ordre, situé en dehors de la bande utile et choisi à titre d'exemple, à la fréquence $2F_I - F_S$ espacée de la porteuse image de $F_S - F_I$.

Un tel produit est suffisamment éloigné du spectre utile pour être en dehors de la bande à fréquence intermédiaire lors des éventuels traitements subis par le signal en amont de l'amplificateur de puissance 8 et en dehors de la bande d'un filtre tel que 10 inclus dans les équipements précédents, mais il en est suffisamment proche pour ne pas être atténué en sortie par rapport au signal utile, même si l'amplificateur 8 est équipé de tubes, et donc chargé par un circuit sélectif.

Il va être montré que la mesure du niveau de ce produit permet d'obtenir une valeur proportionnelle, dans un rapport défini, avec celui du produit $F_I - F_B + F_S$ jusqu'ici utilisé.

Soit $K_3 U^3$ le terme général du troisième ordre de la caractéristique de transfert d'un dispositif non linéaire, où $K_3$ est une constante complexe caractéristique de la non-linéarité dans l'ordre considéré et U le signal composite d'entrée donné par

$$U = I \cos i + B \cos b + S \cos s$$

où I, B, S sont respectivement les amplitudes et i, b, s les phases instantanées des porteuses $F_I$, $F_B$ et $F_S$.

Le développement complet du calcul fait apparaître neuf composantes de même fréquence que celle d'entrée, dont six ont une amplitude fonction du carré de celle d'une des deux autres, trois composantes harmoniques du troisième ordre, et seize de fréquences différentes parmi lesquelles

$$P_B = (3/2)K_3 I B S \cos (i - b + s)$$

qui représente le niveau du produit, dans la bande, tel qu'utilisé selon la méthode des trois générateurs $(F_I - F_B + F_S)$, et

$$P_H = (3/4)K_3 I^2 S \cos (2i - s)$$

qui représente le niveau du produit hors bande $(2F_I - F_S)$.

Il vient $P_H/P_B = (1/2)(I/B)$

Soit en décibels

$$P_B = P_H + 6 + B - I \qquad (1)$$

L'intermodulation dans la bande est ainsi bien établie en fonction des niveaux de la porteuse image, de la bande latérale considérée et de la valeur de $P_H$ qui est indépendante des bandes latérales, et en particulier de la sous porteuse de chrominance.

Le filtre passe bande 14 devra donc transmettre un spectre qui s'étend de celui de $P_H$ à celui de $F_S$.

Le circuit 103 amplifie sélectivement le produit $P_H$ ; il est commandé sur son entrée 107 par le circuit 102 afin de prendre en compte la valeur de $P_H$ à des instants correspondant à des valeurs bien déterminées de la porteuse I. Ce circuit 102 lui fournit également sur son entrée 108, la valeur de crête du signal vidéofréquence qui sert de référence au calcul du niveau de $P_H$ en décibels.

Si l'instant de commande de la prise en compte de $P_H$ est choisi lorsque I est à 8 dB en dessous de la crête de signal, et en faisant B = − 17 dB, l'équation (1) devient

$$P_B = P_H - 3$$

Le niveau mesuré $P_H$ doit donc être diminué de 3 dB pour reproduire la mesure classique à trois générateurs.

De même en choisissant l'instant où I = 2,5 dB, correspondant au noir absolu (instants de suppression de trame), on aura, toujours avec B = − 17 dB

$$P_B = P_H - 8,5$$

La figure suivante montre un exemple de réalisation des circuits 102 et 103.

Sur la figure 2, où les mêmes repères que sur la figure 1 concernent les mêmes organes, l'entrée 106 du circuit 103 est connectée à la sortie 110 à travers les organes suivants connectés en série : un premier filtre passe bande 20, un premier amplificateur 21, un deuxième filtre passe bande 22, un deuxième amplificateur 23, un détecteur 24, un échantillonneur bloqueur 25 ayant une entrée de commande connectée à la sortie 107 du circuit 102, et un calculateur 26 ayant une entrée auxiliaire connectée à sa sortie 108.

L'entrée 105 du circuit 102 est connectée, à travers un filtre passe bande 31 suivi d'un amplificateur 32, à un détecteur 30 dont la sortie 33 est connectée, d'une part, à travers un détecteur de crête 36, à la borne de sortie 108 et à une première entrée 34 d'un comparateur 35, d'autre part à une deuxième entrée 37 du comparateur 35, à travers une porte ET 38, ainsi qu'à l'entrée d'un générateur de tops de synchronisation 39. Une première sortie 40 de ce dernier est connectée à une première entrée 41 d'une porte ET, 42, à travers un premier dispositif à mémoire 43. Une deuxième sortie 44 est connectée, à travers un deuxième dispositif à mémoire 45, à une deuxième entrée 46 de la porte 38 et à une deuxième entrée 47 de la porte 42.

Enfin la sortie 107 du dispositif 102 est connectée soit à la sortie 48 du comparateur 35 à travers la position b du commutateur 49 soit à la sortie de la porte ET 42 à travers sa position a.

La borne d'entrée 105 reçoit le signal filtré par le filtre 14 (figure 1) ; le spectre de ce signal est à nouveau limité par le filtre 31, au seul spectre de la porteuse image, dont la modulation d'amplitude est détectée par le détecteur 30 pour fournir sur la sortie 33 le signal vidéofréquence. Ce signal est reçu, d'une part, par le détecteur de crête 36, d'autre part par le générateur 39, qui délivre les tops de synchronisation de ligne et de trame sur ses sorties respectives 40 et 44.

Le dispositif à mémoire 45 comporte deux bascules monostables en série, la première passe de 0 à 1 sur le front avant du top de synchronisation ligne et revient à 0 au bout d'une constante de temps un peu supérieure à la durée de ce top. Son retour à zéro fait basculer de 0 à 1 la seconde bascule qui se maintient jusqu'à quelques instants avant l'arrivée du prochain top. L'état « 1 » logique de cette bascule caractérise des instants pendant lesquels les tops de ligne sont absents.

De même le dispositif à mémoire 43 comporte deux bascules monostables en série. Mais la première passe de « 0 » à « 1 » sur le front avant du top de synchronisation trame et revient à « 0 » au bout d'une constante de temps un peu supérieure à la durée de ce top. Son retour à « 0 » fait basculer de « 0 » à « 1 » la seconde bascule qui se maintient presque jusqu'à la fin de la période de suppression de trame.

Ainsi la sortie de la porte 42 délivre un « 1 » logique pendant les instants de suppression de trame ne coïncidant pas avec le top de synchronisation ligne. La porte 38 fournit à l'entrée 37 du comparateur 35, le signal vidéofréquence, en l'absence de ces mêmes tops, afin de ne pas perturber le fonctionnement de ce comparateur qui délivre un « 1 » logique sur sa sortie 48 à chaque instant où le niveau du signal vidéofréquence est identique, à une tolérance près d'environ ± 1 dB, à un niveau de 8 dB inférieur à celui du niveau de crête appliqué sur son entrée 34.

Il est connu de réaliser des comparateurs ayant une rapidité suffisante pour que cette comparaison soit effectuée en valeur instantanée même lorsque la porteuse image est modulée à la fréquence la plus élevée.

Toutefois l'expérience montre que cette comparaison instantanée n'est nécessaire que pour les signaux vidéofréquence modulant la porteuse image en modulation d'amplitude à double bande, c'est-à-dire jusqu'à des fréquences de modulation de 1,5 ou 2 MHz au plus. Au-delà, la modulation en bande latérale unique entraîne, pour un même niveau de modulation, une excursion moitié du niveau de la porteuse et la comparaison en valeur moyenne s'avère tout à fait significative, ce qui permet de simplifier la réalisation du comparateur.

La borne de sortie 107 délivre un signal de commande caractéristique pour la position « a » du commutateur 49, des instants de suppression de trame, c'est-à-dire d'un niveau vidéofréquence correspondant au noir absolu (environ 2,5 dB en dessous du niveau de crête du signal modulé) et, pour la position « b », des instants où le niveau instantané ou moyen du signal modulé est à environ 8 dB au-dessous de la crête.

Ce signal de commande est exploité par le circuit 103 qui reçoit le même signal que le circuit 102.

Les filtres de bande 20 et 22 sont centrés sur le produit d'intermodulation $P_H = 2F_I - F_S$.

Le filtrage a été fractionné à cause du faible niveau à exploiter, le premier filtre 20 a surtout pour but d'éviter l'intermodulation parasite que pourrait produire l'amplificateur 21, le second filtre 22 éliminant le bruit hors bande qu'il génère. La largeur de bande de ces filtres est sensiblement égale à celle du spectre de modulation double bande du produit d'intermodulation.

L'amplitude de $P_H$ est obtenue par le détecteur 24 qui réalise une détection instantanée, au moins pour les composantes de modulation qui modulent la porteuse $F_I$ en double bande. Elle est prise en compte à des instants déterminés par l'échantillonneur bloqueur 25, qui en maintient la valeur jusqu'à l'échantillonnage suivant afin d'en évaluer, à l'aide du calculateur 26, le niveau en décibels par rapport au niveau de crête du signal vidéo reçu sur son entrée 108.

Ces instants peuvent être choisis à l'aide du commutateur 49, qui assure l'échantillonnage à deux niveaux prédéterminés de signal vidéo, comme cela a déjà été exposé.

Le dispositif de mesure décrit comporte également le circuit de traitement 101 destiné à une mesure de modulation croisée, dont un exemple de réalisation est donné par la figure suivante.

Sur la figure 3, la borne d'entrée 104 est connectée à l'entrée d'un amplificateur 50 à travers un filtre passe bande 51. La sortie 52 de cet amplificateur 50 est connectée aux deux entrées 53 et 54 d'un calculateur 55 à travers, respectivement, un détecteur de modulation d'amplitude, 56, et un détecteur de crête 57.

Le filtre 51 a une largeur de bande limitée au spectre de la porteuse son et de ses bandes latérales de modulation en fréquence.

Le calculateur 55 détermine le pourcentage de modulation d'amplitude de la porteuse son par rapport au niveau de crête porteuse.

Cette mesure, qui n'est évidemment possible, tout au moins selon la méthode décrite, que dans le cas d'une porteuse son modulée en fréquence, n'est pas indispensable pour parvenir au but recherché, c'est-à-dire la connaissance, en permanence, de la linéarité des équipements locaux de la liaison, car, pour un équipement donné, modulation croisée et intermodulation varient de pair en fonction des caractéristiques d'une même courbe de transfert.

Mais, par construction, la mesure de modulation croisée est une résultante des distorsions introduites sur l'ensemble de la liaison en amont de la mesure alors que celle d'intermodulation ne concerne que les équipements locaux.

L'exploitant peut ainsi en tirer des informations intéressantes supplémentaires. Par exemple, si le niveau d'intermodulation se maintient à une valeur normale, mais si celui de modulation croisée croît avec le temps, il en déduira que la qualité générale de la liaison se détériore mais que ses équipements sont vraisemblablement hors de cause.

Bien entendu les réalisations décrites ne sont que des exemples parmi beaucoup d'autres possibles.

Par exemple, les fonctions du circuit de traitement 102 peuvent être réalisées avec des lignes à retard au lieu de portes et de monostables, et d'autres valeurs de niveaux vidéofréquence de référence peuvent être adoptées.

De même le produit d'intermodulation hors bande pris en considération, et détecté, peut être différent et en particulier égal à $2F_S - F_I$.

**Revendications**

1. Dispositif de mesure, en exploitation, du niveau des produits de non-linéarité générés dans les équipements de transmission et/ou de retransmission de signaux de télévision dont les émetteurs comportent un étage final d'amplification de puissance (8) suivi d'un filtre de bande (10), comportant un circuit de prélèvement du signal amplifié par cet étage, caractérisé en ce que le circuit de prélèvement (11, 13 et 14) est inséré en amont du filtre de bande (10), et en ce que le dispositif de mesure comporte en outre :

— un premier circuit de traitement (103) du signal prélevé comportant une entrée de commande (107), un amplificateur sélectif (20 à 23) et un détecteur (24) d'un produit d'intermodulation du troisième ordre situé en dehors de la bande du signal amplifié utile, ce premier circuit fournissant un signal d'amplitude proportionnelle au niveau du produit d'intermodulation détecté lorsqu'un signal est appliqué à l'entrée de commande,

— un deuxième circuit de traitement (102) comportant un filtre (31) et un circuit détecteur (30) du signal vidéofréquence inclus dans le signal prélevé, et un circuit de commande dont la sortie est couplée à l'entrée de commande (107) du premier circuit et qui délivre un signal de sortie pendant des instants correspondant à au moins un niveau prédéterminé du signal vidéofréquence.

2. Dispositif de mesure selon la revendication 1, caractérisé en ce que le deuxième circuit de traitement (102) comporte en outre un détecteur de crête (36) du signal vidéofréquence et en ce que le circuit de commande comporte un circuit d'extraction des tops de synchronisation de trame et de ligne de ce signal vidéofréquence, et un comparateur (34) comparant ce dernier signal avec un signal de référence issu du détecteur de crête, un premier niveau prédéterminé étant celui correspondant aux instants de suppression de trame et un deuxième niveau étant égal au niveau moyen du signal de référence.

3. Dispositif de mesure selon la revendication 2, caractérisé en ce que le circuit de commande comporte en outre un circuit d'inhibition de son signal de sortie pendant des intervalles de temps débutant un peu avant, et se terminant un peu après, chaque top de synchronisation ligne, le signal de référence ayant un niveau égal à 8 dB au-dessous du niveau de la crête du signal vidéofréquence.

4. Dispositif de mesure selon la revendication 3, caractérisé en ce que le premier circuit de traitement (103) comporte en outre un échantillonneur bloqueur (25) du signal de sortie du détecteur (24), cet échantillonneur ayant une entrée de commande couplée à la sortie (107) du circuit de commande et une sortie couplée à un dispositif de calcul (26) dont une entrée de commande est couplée à la sortie (108) du détecteur de crête, ce dispositif de calcul fournissant la valeur de l'atténuation du produit d'intermodulation détecté par rapport au niveau de la crête du signal vidéofréquence.

5. Dispositif de mesure selon l'une des revendications 1 à 4, caractérisé en ce que le produit d'intermodulation de troisième ordre est détecté à $2F_I - F_S$ ou à $2F_S - F_I$, où $F_I$ et $F_S$ sont respectivement les fréquences des porteuses image et son des signaux de télévision transmis.

6. Dispositif de mesure selon l'une des revendications 1 à 4, appliqué aux signaux de télévision comportant une porteuse modulée en fréquence par les signaux audiofréquence, caractérisé en ce qu'il comporte un troisième circuit de traitement (101) comprenant un amplificateur sélectif (51, 50) de la porteuse modulée dont la sortie est couplée à l'entrée d'un détecteur de crête (57) de la porteuse et à celle d'un détecteur de modulation d'amplitude (56), un calculateur (55) relié aux sorties de ces deux détecteurs (56 et 57) fournissant le pourcentage de modulation d'amplitude de la porteuse modulée.

7. Dispositif de mesure selon l'une des revendications 1 à 4, caractérisé en ce que le circuit de prélèvement comporte un convertisseur (13) du signal prélevé en fréquence intermédiaire.

8. Dispositif de mesure selon la revendication 6, appliqué à un émetteur ou un réémetteur comportant un dispositif de transposition de fréquence en fréquence intermédiaire comprenant un générateur d'oscillation locale (5), caractérisé en ce que le convertisseur (13) est couplé au générateur d'oscillation locale (5).

9. Emetteur ou réémetteur de télévision comportant un dispositif de mesure selon l'une des revendications 1 à 7.

**Claims**

1. Device for measurement, in operation, of the level of non-linearity products generated within the television signal transmission and/or retransmission equipments the transmitters of which comprise a final power amplification stage (8) followed by a band filter (10), comprising a circuit for deriving the signal amplified by this stage characterized in that the deriving circuit (11, 13 and 14) is inserted upstream from the band filter (10), and in that the measurement device further comprises :

— a first processing circuit (103) for processing the derived signal comprising a control input (107), a selective amplifier (20 to 23) and a detector (24) for detecting an intermodulation product of third order lying outside the band of the amplified useful signal, this first circuit supplying a signal having an amplitude which is proportional to the level of the intermodulation product detected during application of a signal to the control input,

— a second processing circuit (102) comprising a filter (31) and a detector circuit (30) for detecting the video frequency signal contained in the derived signal, and a control circuit the output of which is coupled to the control input (107) of the first circuit, and supplying an output signal during moments corresponding to at least one predetermined level of the video frequency signal.

2. Measurement device according to claim 1, characterized in that the second processing circuit (102) further comprises a detector (36) for detecting the crest value of the video frequency signal, and in that the control circuit comprises an extraction circuit for extracting the frame and line synchronization pulses of this video frequency signal, and a comparator (34) comparing the latter signal to a reference signal supplied by the crest value detector, a first predetermined level being that corresponding to the frame blanking moments and a second level being equal to the mean level of the reference signal.

3. Measurement device according to claim 2, characterized in that the control circuit further comprises a circuit for inhibiting its output signal during time intervals beginning slightly prior to and ending slightly after each line synchronization pulse, the reference signal having a level of 8 dB below the crest level of the video frequency signal.

4. Measurement device according to claim 3, characterized in that the first processing circuit (103) further comprises a sample and hold circuit (25) for the output signal of the detector (24), this sampler having having a control input coupled to the output (107) of the control circuit and an output coupled to a computing device (26) a control input of which is coupled to the output (108) of the crest value detector, this computing device supplying the value of the attenuation of the detected intermodulation product with respect to the crest value of the video frequency signal.

5. Measurement device according to any of claims 1 to 4, characterized in that the intermodulation product of third order is detected at $2F_I - F_S$ or at $2F_S - F_I$ wherein $F_I$ and $F_S$ are the image and sound carrier frequencies of the transmitted television signals, respectively.

6. Measurement device according to any of claims 1 to 4, applied to television signals comprising a carrier which is frequency modulated by the audio frequency signal, characterized in that it comprises a third processing circuit (101) comprising a selective amplifier (51, 50) for amplifying the modulated carrier the output of which is coupled to the input of a detector (57) for detecting the crest value of the carrier and that of an amplitude modulation detector (56), a computer (55) connected to the outputs of these two detectors (56 and 57) supplying the percentage of amplitude modulation of the modulated carrier.

7. Measurement device according to any of claims 1 to 4, characterized in that the deriving circuit comprises a converter (13) for converting the derived signal to the intermediate frequency.

8. Measurement device according to claim 6, applied to a transmitter or repeater comprising a device for frequency translation to the intermediate frequency comprising a local oscillation generator (5), characterized in that the converter (13) is coupled to the local oscillation generator (5).

9. Television transmitter or repeater comprising a measurement device according to any of claims 1 to 7.

**Ansprüche**

1. Vorrichtung zur während des Betriebes erfolgenden Messung des Pegels von Nichtlinearitätsprodukten, die in den Fernsehsignal-Übertragungs- und/oder Weiterübertragungsgeräten erzeugt werden, deren Sender eine Leistungsverstärker-Endstufe (8) gefolgt von einem Bandfilter (10) enthalten, mit einer Schaltung zur Entnahme des durch diese Stufe verstärkten Signals, dadurch gekennzeichnet, daß die Entnahmeschaltung (11, 12 und 13) vor dem Bandfilter (10) eingefügt ist und daß diese Meßvorrichtung ferner umfaßt :

— eine erste Verarbeitungsschaltung (103) zur Verarbeitung des entnommenen Signals, mit einem Steuereingang (107), einem selektiven Verstärker (20 bis 23) und einem Detektor (24) zur Erfassung eines Intermodulationsproduktes dritter Ordnung, das außerhalb des Bandes des verstärkten Nutzsignals liegt, wobei diese erste Schaltung ein Signal mit einer Amplitude liefert, die proportional zu dem Pegel des Intermodulationsproduktes ist, das erfaßt wird, während ein Signal an den Steuereingang angelegt ist,

— eine zweite Verarbeitungsschaltung (102) mit einem Filter (31) und einer Detektorschaltung (30) zur Erfassung des Videofrequenzsignals, das in dem entnommenen Signal enthalten ist, und einer Steuerschaltung, deren Ausgang an den Steuereingang (107) der ersten Schaltung angekoppelt ist und die ein Ausgangssignal während der Zeitmomente abgibt, welche wenigstens einem vorbestimmten Pegel des Videofrequenzsignals entsprechen.

2. Meßvorrichtung nach Anspruch 1, dadurch gekennzeichnet, daß die zweite Verarbeitungsschaltung (102) ferner einen Scheitelwertdetektor (36) zur Erfassung des Scheitelwertes des Videofrequenzsignals umfaßt und daß die Steuerschaltung eine Entnahmeschaltung zur Entnahme der Bild- und Zeilen-Synchronisationsimpulse dieses Videofrequenzsignals sowie einen Komparator (34) umfaßt, der das letztgenannte Signal mit einem Bezugssignal vergleicht, das von dem Scheitelwertdetektor abgegeben wird, wobei ein erster vorbestimmter Pegel derjenige ist, welcher den Bildaustastmomenten entspricht, und ein zweiter Pegel gleich dem mittleren Pegel des Bezugssignals ist.

3. Meßvorrichtung nach Anspruch 2, dadurch gekennzeichnet, daß die Steuerschaltung ferner eine Sperrschaltung zur Sperrung ihres Ausgangssignals während Zeitintervallen umfaßt, die kurz vor jedem Zeilensynchronisationsimpuls beginnen und kurz danach enden, wobei das Bezugssignal einen Pegel aufweist, der 8 dB unterhalb des Pegels des Scheitelwertes des Videofrequenzsignals liegt.

4. Meßvorrichtung nach Anspruch 3, dadurch gekennzeichnet, daß die erste Verarbeitungsschaltung (103) ferner eine Abtast- und Halteschaltung (25), für das Ausgangssignal des Detektors (24) umfaßt, wobei dieser Abtaster einen Steuereingang aufweist, der an den Ausgang (107) der Steuerschaltung angeschlossen ist, und einen Ausgang, welcher an eine Rechenvorrichtung (26) angekoppelt ist, deren Steuereingang an den Ausgang (108) des Scheitelwertdetektors angekoppelt ist, wobei diese Rechenvorrichtung den Wert der Dämpfung des erfaßten Intermodulationsproduktes in bezug auf den Scheitelwertpegel des Videofrequenzsignals liefert.

5. Meßvorrichtung nach einem der Ansprüche 1 bis 4, dadurch gekennzeichnet, daß das Intermodulationsprodukt dritter Ordnung bei $2F_I - F_S$ oder bei $2F_S - F_I$ erfaßt wird, worin $F_I$ die Bildträgerfrequenz und $F_S$ die Tonträgerfrequenz der übertragenen Fernsehsignale sind.

6. Meßvorrichtung nach einem der Ansprüche 1 bis 4, angewendet auf Fernsehsignale, die einen durch die Tonsignale frequenzmodulierten Träger enthalten, dadurch gekennzeichnet, daß sie eine dritte Verarbeitungsschaltung (101) mit einem selektiven Verstärker (51, 50) zur Verstärkung des modulierten Trägers umfaßt, dessen Ausgang an den Eingang eines Scheitelwertdetektors (57) zur Erfassung des Scheitelwertes des Trägers und an den eines Amplitudenmodulationsdetektors (56) angeschlossen ist, wobei ein mit den Ausgängen dieser beiden Detektoren (56 und 57) verbundener Rechner (55) den Amplitudenmodulationsprozentsatz des modulierten Trägers liefert.

7. Meßvorrichtung nach einem der Ansprüche 1 bis 4, dadurch gekennzeichnet, daß die Entnahmeschaltung einen Umsetzer (13) zur Umsetzung des entnommenen Signals in die Zwischenfrequenz umfaßt.

8. Meßvorrichtung nach Anspruch 6, angewendet auf einen Sender oder Weitersender mit einer Vorrichtung zur Frequenzumsetzung in die Zwischenfrequenz, die einen Lokaloszillator (5) umfaßt, dadurch gekennzeichnet, daß der Umsetzer (13) an den Lokaloszillator (5) angekoppelt ist.

9. Fernsehsender oder -Relaissender mit einer Meßvorrichtung nach einem der Ansprüche 1 bis 7.

**0 031 269**

FIG_1

FIG_3

DETECTEUR DE MODULATION D'AMPLITUDE

2

102

105

FILTRE PASSE.BANDE — 31

32

DETECTEUR — 30

33

DETECTEUR DE CRÊTE — 36

GENERATEUR DE SYNCHRO. — 40

39

44

43

45

MEMOIRE — 43

MEMOIRE — 45

47

46

41

42

38

37

35

COMPARATEUR

34

48  b  49

a

107

108

FIG_2

103

20  FILTRE PASSE.BANDE

21

22  FILTRE PASSE.BANDE

23

24  DÉTECTEUR

25

26  CALCULATEUR

110

106

ECHANTILLONNEUR BLOQUEUR